(19) Europäisches Patentamt
European Patent Office
Office européen des brevets

(11) **EP 4 664 105 A1**

(12) **EUROPEAN PATENT APPLICATION**

(43) Date of publication:
**17.12.2025 Bulletin 2025/51**

(21) Application number: **24181265.0**

(22) Date of filing: **10.06.2024**

(51) International Patent Classification (IPC):
**G01N 30/74** (2006.01)   **G01N 15/0205** (2024.01)
**G01N 21/53** (2006.01)

(52) Cooperative Patent Classification (CPC):
**G01N 21/53; G01N 15/0211; G01N 30/74;**
G01N 2030/746

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Malvern Panalytical Limited
Malvern, Worcestershire WR14 1XZ (GB)**

(72) Inventors:
• **CATTERALL, Clive
Malvern, WR14 1XZ (GB)**
• **PETROV, Plamen
Malvern, WR14 1XZ (GB)**
• **STENSON, John
Malvern, WR14 1XZ (GB)**
• **CAI, Bin
Malvern, WR14 1XZ (GB)**

(74) Representative: **Barker Brettell LLP
100 Hagley Road
Edgbaston
Birmingham B16 8QQ (GB)**

(54) **FLUID CHROMATOGRAPHY DETECTOR**

(57)     A fluid chromatography detector (100) comprises: a flow cell (110) for receiving a flow of a sample from a separation column (200), the sample comprising a plurality of particles suspended in a fluid and the flow cell (110) comprising an inlet (117) and an outlet (118); a light source (120) configured to illuminate the sample within the flow cell (110) with an illuminating light beam (121), thereby generating a refracted light portion (122) resulting from refraction of the illuminating light beam (121), and a scattered light portion (123) resulting from scattering of the illuminating light beam (121) by the plurality of particles in the flow cell (110) in a direction different to that of a propagation direction of the refracted light portion (122) in the sample; a reflector (130) configured to reflect either the refracted light portion (122) or the scattered light portion (123); a refractive index detector (140) configured to detect at least part of the refracted light portion (122); and a scattered light detector (150) configured to detect at least part of the scattered light portion (123).

Figure 1

**Description**

**FIELD OF THE INVENTION**

The present invention relates to fluid chromatography detectors and systems for performing fluid chromatography.

**BACKGROUND**

Fluid chromatography, e.g., High Pressure Liquid Chromatography (HPLC), is a widely used method that encompasses a range of analytical techniques. Generally, a sample of material (e.g., a mixture of solid material suspended in a fluid) is passed through an analytical/separation column. The different materials within the sample are separated within the column based upon their 'retention' - i.e., the amount of chemical and/or physical interaction that they have with the column.

If performed correctly, the output of the separation column will be a sample flow where the different materials within the sample are separated and eluted as discrete bands or peaks. The sample flow can then be interrogated using a number of techniques. For example, a flow cell, through which the sample flow passes, may be illuminated by a light beam and the interaction of the light with the sample analysed. Based upon the interaction between the light and the sample, properties of the sample may be determined. For example, the concentrations of each component may be determined with reference to an area under an absorption peak (with reference to a standard).

A number of different analysis techniques may be of interest. Studying the refractive, absorptive and/or scattering properties of the sample may each provide useful information, for example. Therefore, there is a desire to be able to perform a plurality of analysis techniques on the sample via a 'multi-detection' apparatus.

However, existing multi-detection apparatuses pose significant limitations. As the flow sample passes through the apparatus, different parts of the flow may begin to separate and mix. Therefore, rather than existing as discrete bands within the sample flow based upon the different materials' retention, these bands begin to blur together. This may mean that the bands of different material cannot be resolved and therefore properties of the materials cannot be determined - a process known as band broadening. Band broadening is particularly problematic in multi-detection apparatuses due to the propensity for the sample flow to separate/mix as it moves between the detection regions associated with each of the analysis techniques. Additionally, local differences may be introduced into the sample flow, leading to a lack of accuracy and/or reliability in any characterisation. If a first part of the sample flow is subject to a first analysis technique and a second part of the sample flow is subject to a second analysis technique, the two parts of the sample flow may be subjected to different conditions (e.g., mixing, changes in flow rate, different sample concentrations, etc.) which may mean that the two analysis techniques are not being performed on a homogeneous sample.

These limitations mean that it is difficult to combine multiple analysis techniques effectively into the same apparatus. Thus, there is a desire to address at least some of these issues in order to provide an improved multi-detection fluid chromatography apparatus.

**SUMMARY**

According to a first aspect, there is provided a fluid chromatography detector comprising:

> a flow cell for receiving a flow of a sample from a separation column, the sample comprising a plurality of particles suspended in a fluid and the flow cell comprising an inlet and an outlet;
> a light source configured to illuminate the sample within the flow cell with an illuminating light beam, thereby generating a refracted light portion resulting from refraction of the illuminating light beam, and a scattered light portion resulting from scattering of the illuminating light beam by the plurality of particles in the flow cell in a direction different to that of a propagation direction of the refracted light portion in the sample;
> a reflector configured to reflect either the refracted light portion or the scattered light portion;
> a refractive index detector configured to detect at least part of the refracted light portion;
> a scattered light detector configured to detect at least part of the scattered light portion; and
> a computing device configured to determine the refractive index of the sample within the flow cell based on an output from the refractive index detector and to determine a particle property based on an output from the scattered light detector.

The fluid chromatography detector of the first aspect may allow simultaneous measurements of the refractive index of the sample and scattered light (e.g., forward scattered light). The reflector is configured to reflect one of the refracted light portion or the scattered light portion, while not reflecting the other. This may provide a convenient arrangement for allowing simultaneous detection of refracted and scattered light. For example, the scattered light portion may be reflected at an angle of approximately 90 degrees while the refracted light portion continues straight (relative to an optical axis of the illuminating light beam through the flow cell), thereby allowing the scattered light portion to be detected to the side, without blocking the refracted light portion from the refractive index (RI) detector.

The fluid chromatography detector may further comprise:

a UV light source configured to illuminate the sample within the flow cell, thereby generating a transmitted UV light portion, an intensity of the transmitted UV light portion being dependent upon an absorbance of the sample within the flow cell to UV light; and a UV absorption detector configured to detect at least part of the transmitted UV light portion.

The UV light source may illuminate the sample within the flow cell from a direction parallel to a flow direction of the sample between the inlet and the outlet. The illuminating light beam may illuminate the flow cell from a direction perpendicular to the flow direction of the sample between the inlet and the outlet. I.e., the light source and the UV light source may illuminate the flow cell from orthogonal directions. Inclusion of the UV light source and UV absorption detector may allow for simultaneous RI, scattering and UV absorption measurements.

According to a second aspect, there is provided a fluid chromatography detector comprising:

a flow cell for receiving a flow of a sample from a separation column, the sample comprising a plurality of particles suspended in a fluid and the flow cell comprising an inlet and an outlet; a light source configured to illuminate the sample within the flow cell with an illuminating light beam, thereby generating a refracted light portion resulting from refraction of the illuminating light beam, and a scattered light portion resulting from scattering of the illuminating light beam by the plurality of particles in the flow cell in a direction different to that of a propagation direction of the refracted light portion in the sample; a UV light source configured to illuminate the sample within the flow cell, thereby generating a transmitted UV light portion, an intensity of the transmitted UV light portion being dependent upon an absorbance of the sample within the flow cell to UV light, wherein the UV light source illuminates the sample within the flow cell from a direction parallel to a flow direction of the sample between the inlet and the outlet; a scattered light detector configured to detect at least part of the scattered light portion; a UV absorption detector configured to detect at least part of the transmitted UV light portion; and a computing device configured to determine a particle property based on an output from the scattered light detector.

The fluid chromatography detector of the second aspect may allow simultaneous measurements of scattered light from the sample and the UV absorption of the sample. The illuminating light beam may illuminate the flow cell from a direction perpendicular to the flow direction of the sample between the inlet and the outlet. I.e., the light source and the UV light source may illuminate the flow cell from orthogonal directions.
According to a third aspect, there is provided fluid chromatography detector comprising:

a flow cell for receiving a flow of a sample from a separation column, the sample comprising a plurality of particles suspended in a fluid and the flow cell comprising an inlet and an outlet; a light source configured to illuminate the sample within the flow cell with an illuminating light beam, thereby generating a scattered light portion resulting from scattering of the illuminating light beam by the plurality of particles in the flow cell; a UV light source configured to illuminate the sample within the flow cell, thereby generating a transmitted UV light portion, an intensity of the transmitted UV light portion being dependent upon an absorbance of the sample within the flow cell to UV light, wherein the UV light source illuminates the sample within the flow cell from a direction parallel to a flow direction of the sample between the inlet and the outlet; a scattered light detector configured to detect at least part of the scattered light portion; a UV absorption detector configured to detect at least part of the transmitted UV light portion; and a computing device configured to perform a dynamic light scattering, DLS, analysis to determine a particle property from an output of the scattered light detector.

The fluid chromatography detector of the third aspect may allow simultaneous DLS analysis of the sample and measurement of the UV absorption of the sample. The illuminating light beam may illuminate the flow cell from a direction perpendicular to the flow direction of the sample between the inlet and the outlet. I.e., the light source and the UV light source may illuminate the flow cell from orthogonal directions.
The fluid chromatography detector according to the second or third aspect may further comprise:

a reflector configured to reflect either a refracted light portion or the scattered light portion, the refracted light portion resulting from refraction of the illuminating light beam; and a refractive index detector configured to detect at least part of the refracted light portion; wherein the computing device is further configured to determine the refractive index of the sample within the flow cell based on an output from the refractive index detector.

Inclusion of the refractive index (RI) detector may allow for simultaneous RI, scattering (including DLS) and UV absorption measurements. The reflector is configured to reflect either the refracted light portion or the scattered light portion, which may provide for a more convenient arrangement of the various detectors. For example, the scattered light portion may be reflected at approximately 90 degrees to be detected to the side of the apparatus, such that the scattered light detector does not block an optical path of the RI detector.

The fluid chromatography detectors of the first, second and third aspect include a plurality of detector types in various combinations. The fluid chromatography detector may include one or more angled light scattering (ALS) detectors (which may include DLS detectors and/or ALS detectors at various scattering angles), a UV absorption detector and/or a RI detector so as to provide a multi-detector system. The detector types may be combined in a various way. One or more detector types may be omitted from the fluid chromatography detector. The fluid chromatography detector of the present invention may be regarded as a modular system of various detector types.

Features of any one of these detector types described in relation to one aspect of the invention may be applied to other aspects of the invention. For example, features associated with the RI detector of the fluid chromatography detector of the first aspect may also be provided to the fluid chromatography detector of the second or third aspect.

The detectors of the first, second and third aspects may enable various detector types - e.g., scattered light detectors (including detectors at various angles and/or DLS detectors), an RI detector and/or a UV absorption detector - to be arranged around a single flow cell. The ability to take multiple measurements around a single flow cell may reduce band broadening compared to apparatuses that use a plurality of flow cells connected in series. Embodiments of the present invention may reduce separation/mixing of the sample flow that occurs at the inlet/outlet of the flow cell, as there is only one such inlet and outlet. The use of a single flow cell may reduce the need to utilise special flow geometries, diffusers or expansion/contraction nozzles to achieve sufficiently low band broadening. Compared to apparatuses that use a plurality of flow cells connected in parallel, embodiments of the present invention may provide for more accurate and/or reliable measurement of the sample's properties. The single flow cell used in embodiments of the present invention may enable multiple measurements to be taken from the same volume of sample, compared to disparate volumes in different flow cells (which may be highly dissimilar if the flow is not separated into each flow cell equally/homogenously). The present invention may also reduce the pressure drop that may occur in apparatuses that use a plurality of flow cells.

The fluid chromatography detector may further comprise additional measurement devices other than the optical-based RI, scattering and UV absorption apparatuses/techniques discussed above. Any suitable detection technique used in fluid chromatography may be combined with the teaching of the present invention. For example, an outlet of the flow cell may be fluidly coupled to a viscometer.

The fluid chromatography detector of the present invention may enable analysis of a wider range of materials/samples, e.g., materials that have a similar column retention and thus cannot be analysed with sufficient resolution by existing apparatuses.

The reflector may comprise a reflective surface and a hole extending through the reflective surface, wherein the reflector is arranged such that the refracted light portion passes through the hole and at least part of the scattered light portion is reflected by the reflector.

The reflector may be an angled mirror, with a hole through its centre. Alternatively, the reflector may comprise a prism with a hole, for example. The hole may have a relatively small angular aperture (visual angle) relative to the centre of the sample flow through the flow cell. For example, the angular aperture may be less than 3 degrees - i.e., light propagating from the centre of the flow cell at an angle of less than 3 degrees relative to the optical path of the illuminating light beam will pass through the hole, while any light propagating at an angle greater than this is reflected by the reflector (or misses the reflector entirely). The hole may have an angular aperture of 1 degree, 2 degrees, 3 degrees or 5 degrees, for example. The reflector may function as a spatial filter; very low angle light (e.g., the refracted light portion) is able to pass through the reflector, while light that has been scattered above the relevant angle (the scattered light portion) is reflected by the reflector. The reflector may be angled such that the scattered light portion is detected to the side of the optical path.

Alternatively, the reflector may comprise a small mirror (comparable in size to the hole discussed above), so that the refracted light portion is reflected and detected to the side of the optical path, while the scattered light portion is unimpeded.

The scattered light detector may comprise a low-angle light scattering (LALS) detector arranged to detect the scattered light portion that is reflected by the reflector.

The reflector may enable light scattered at only a few degrees relative to the optical axis to be detected, without the scattered light detector blocking the reflector. The ability to collect scattered light at low angles may provide for approved capability to determine the characteristics of some samples (e.g., an estimated molecular weight value may be very near to the actual molecular weight of molecules in the sample). LALS may be regarded as light scattered at an angle of less than 20 degrees, for example. The LALS detector may be arranged to detect light scattered at 7 degrees, for example. The scattering angle as used herein is defined as the angle between the scattered light and the illuminating light beam in the sample.

The fluid chromatography detector may further comprise a spatial filter (e.g. an annular mask), wherein the spatial filter is arranged so as to only allow a subportion of the scattered light portion that is reflected by the reflector to be detected by the LALS detector, the sub-portion corresponding to light scattered at a range of angles between a minimum scatter angle and a maximum scatter angle relative to an optical path of the illuminating light beam. The minimum scatter angle may be at least 2 degrees, or 3 degrees, or 5 degrees. The maximum scatter angle may be 10 degrees or less. A difference between the minimum scatter angle and the maximum scatter angle may be between 0.5 degrees and 5 degrees. However, the range of angles received/detected by any one scattered light detector will depend upon other parameters of the apparatus (e.g., the numerical aperture of a collection lens), discussed further below.

For unpolarized light with a plane wavefront, the scattering angle from a spherical particle describes a cone of light centred about line normal to the light wavefront and passing through the particle. Thus, light scattered at a given angle will intersect a plane parallel to said wavefront as a ring. Intensity of scattered light may vary with angle. Therefore, it may be desirable to only detect a sub-portion of the scattered light at particular angle. The annular mask may function as a spatial filter, only allowing the sub-portion of the scattered light portion corresponding to a given range of scattering angles to be detected by the LALS detector. The annular ring may be an annular hole with a distance between an inner and outer mask radii configured to allow light through over a range of 1 degree or less, 2 degrees or less or 4 degrees or less, for example. The LALS detector may detect scattered light with an angle of $7 \pm 1$ degrees, for example, which may improve the accuracy of scattered light measurements.

The scattered light detector may comprise a right-angle light scattering (RALS) detector arranged to detect a sub-portion of the scattered light portion that is scattered at an angle of approximately 90 degrees relative to an optical path of the illuminating light beam.

The sub-portion of the scattered light portion detected by the RALS detector may not interact with the reflector. For higher light scattering angles (e.g., above 20 degrees), the scattered light may instead scatter out of a side of the flow cell. The RALS detector may be used in addition to the LALS detector, thus allowing the scattered light portion to be sampled at least two different scattering angles. The combination/comparison of LALS and RALS detection may provide for more accurate characterisation of the sample. For example, dependent upon the Mie scattering pattern of the particle, the relative intensities of scattered light at the LALS detector and the RALS detector may be used to determine the particle's size.

The fluid chromatography detector may further comprise an aperture, the aperture configured to block part of the scattered light portion so that the sub-portion detected by the RALS detector corresponds to light scattered within a predetermined range of 90 degrees relative to an optical path of the illuminating light beam.

Similar to the scattering discussed for LALS above, light scattered at an angle of 90 degrees to the wavefront (e.g., the optical axis of the illuminating light beam) will intersect a ring that is perpendicular to the wavefront. The aperture may comprise a slit such that only the sub-portion of the scattered light portion corresponding to a given range of scattering angles is detected by the RALS detector. The slit/aperture may have a width configured to allow light through over a range of 1 degree, 2 degrees or 4 degrees, for example. The RALS detector may detect scattered light with an angle of $90 \pm 1$ degrees, for example, which may improve the accuracy of scattered light measurements. The slit may have a length that is sufficiently long to allow enough of the 90 degree scattered light through for detection.

The scattered light detector may be a multi-angle light scattering (MALS) detector comprising at least five detector elements, each detector element being arranged to detect a sub-portion of the scattered light portion that has been scattered at a different angle relative to an optical path of the illuminating light beam.

The MALS detector may comprise at least 5, at least 10 or at least 15 separate detector elements. The MALS detector may comprise the LALS and/or the RALS detector discussed above. For example, the MALS detector may comprise a 7 degree detector, a 90 degree detector and a plurality of other detectors arranged to detect light at other scattering angles (including back scattering). The MALS detector may enable a reconstruction of the Mie scattering pattern for particles within the sample. The MALS detector may be particularly advantageous for samples comprising particles comparable to or larger than the wavelength of the illuminating light beam, due to finer angular dependence in the scattering pattern compared to smaller particles. For smaller particles (e.g., less than 60 nm diameter when using red light of ~ 700 nm), only using a LALS detector and a RALS detector may be sufficient for characterisation.

The fluid chromatography detector may further comprise a lens, the lens being configured to focus a sub-portion of the scattered light portion onto the scattered light detector.

Each scattered light detector (e.g., the LALS and the RALS detector) may have a separate lens or other optical element configured to capture and focus the sub-portion of scattered light associated with said detector. The lens may capture all of the light corresponding to the relevant scattering angle (e.g., all light passing through a mask/aperture) and focus it onto a sensor of the detector. This may enable smaller sensors to be used and/or more scattered light to be detected.

The scattered light detector may comprise a dynamic light scattering (DLS) detector. The computing device may be configured to perform a DLS analysis to determine a particle property from an output of the DLS detector. The use of DLS may enable more accurate or additional characterisation of particles within the sample. In DLS analysis a time history of the intensity of scattered light at a particular angle is obtained (e.g., by binning a sequence of photon arrival times). An autocorrelation function may be determined from the time history of the intensity of the scattered light. The autocorrelation function may be used to determine the size of particles in the sample (e.g., using cumulants or CONTIN analysis or any similar method).

The DLS detector may have a sufficiently high bandwidth and sensitivity in order to be able to register fast changes in the intensity, especially those associated with small particles. The scattered light detector may comprise an avalanche photodiode (APD), for example. The APD has a finite recovery time that determines the minimum time required between detection events. An APD of the DLS detector may have a recovery time on the order of tens of nanoseconds. The DLS detector may therefore have a bandwidth of at least 50 MHz, or at least 100 MHz. An APD of the DLS detector may have a quantum efficiency of at least 70%, or at least 80%, for the scattered light wavelengths in question (e.g., optical light in the range of 600 nm - 700 nm).

The DLS-capable detector may be any suitable detector used for performing DLS. The detector may be a single photon detector (of any type). At least part of the scattered light portion may be collected at a suitable angle and provided to a photomultiplier, an avalanche photodiode or similar sensor. A collecting lens may be used to capture the scattered light, and an optical fibre used to feed this to the detector, for example.

The scattered light detector may further comprise a static light scattering (SLS) detector.

The scattered light detector may comprise a combination of SLS detectors and/or DLS detectors. Detectors that are capable of DLS (e.g., having sufficiently high bandwidth) may also be used for SLS measurements. All of the detector elements of the scattered light detector may be DLS detectors, each being used for static measurements (e.g., LALS or RALS) and DLS. However, just one of the detector elements may be DLS capable in order for DLS to be performed. For example, a LALS detector may be an SLS detector, while a RALS detector may be a DLS detector. Using DLS detectors for both SLS and DLS measurements may reduce the total number of scattering detectors used. Providing some of the detector elements as SLS detectors (e.g., without a high bandwidth or other performance characteristics useful for DLS) may reduce the overall cost of the scattered light detector.

The SLS detector and the DLS detector may be arranged to detect different sub-portions of the scattered light portion that have been scattered at different angles relative to an optical path of the illuminating light beam. The scattered light detected at the SLS detector and the DLS detector may correspond to different sub-portions of the scattered light portion (e.g., corresponding with light scattered in different directions). For example, the SLS detector may be arranged as a LALS detector, while the DLS detector may be arranged as a RALS detector.

The fluid chromatography detector may further comprise a beam splitter configured to split at least part of the scattered light portion into a first part and a second part. The SLS detector may be arranged to detect the first part and the DLS detector may be arranged to detect the second part. The scattered light detected at the SLS detector and the DLS detector may be derived from the same sub-portion of the scattered light portion. For example, light scattered at an angle of 90 degrees relative to the optical axis may be collected (e.g., using an aperture and lens as discussed above) and passed through a beam splitter. Half of the 90 degree scattered light may be detected by the SLS detector and the other half may be detected by the DLS detector. This may enable static and dynamic light scattering measures to be performed simultaneously. This may reduce the number of angular sub-portions of scattered light that need to be collected, which may reduce the number of optical elements provided in the detector setup.

The refractive index detector may be a differential refractive index detector. The computing device may be configured to determine the refractive index of the sample within the flow cell based upon a change in the position of the refracted light portion relative to a baseline position.

Changes in the position of the refracted light portion may be measured relative to the baseline position. The baseline position may correspond to a predetermined position associated with a control sample (e.g., when there is no flow through the flow cell, or where the sample does not comprise any particles - i.e., comprising an eluent with no particles yet added). The differential refractive index detector may enable easier RI measurements, as only a linear measurement of relative change in position is required, rather than an absolute measurement of spot position.

The differential refractive index detector may comprise at least two detector elements. The fluid chromatography detector may further comprise an alignment element configured to selectively translate the position of the refracted light portion relative to the at least two detector elements.

For example, the differential RI detector may comprise a mirrored prism and two sensors (e.g., two photodiode detector elements) configured to measure light reflected from either side of an apex of the prism. This may provide a linear response to changes in RI. The alignment element (also referred to as a 'zero glass') may comprise a tilted glass block or a prism located between the flow cell and the RI detector. The angle of the alignment element may be varied to translate the refracted light portion beam sideways, without altering the angle of said beam. The alignment element may be used to calibrate or zero the refracted light portion (e.g., so that it is split equally between two detector elements) prior to a measurement. This may enable correction of differences in the liquid refractive index (from measurement to measurement) and/or thermal alignment drift.

If the laser irradiance arriving at the detector is too high, the alignment element could be made from a neutral density filter glass. The alignment element may be wedged and/or tilted slightly about a horizontal axis to prevent ghost reflections from landing on the refractive index detector.

The differential refractive index detector may comprise a position sensitive device (PSD).

The PSD may be a photodiode array with a detection area wide enough to detect a maximum change of spot positions that is expected to be encountered (dependent upon the range of liquid refractive indices, sample differential refractive index values and concentrations). For typical materials and the setup discussed herein, the maximum displacement of the refracted light portion may be approximately 30 microns. The PSD may reduce or eliminate the need for the zero glass and associated components (e.g., a motor to rotate the zero glass).

The PSD may mitigate issues associated with poor illuminating beam quality. If the beam is asymmetric or contains multiple intensity peaks, a split photodiode may report a non-linear output as the beam tracks across the split between photodiodes. If the spot is located in the central region of a large enough PSD, the PSD may report the position of the beam centroid. Although poor beam quality may affect the reported location of the spot, so long as the beam shape does not change during the measurement, the device may still report changes in the spot location with good linearity. The use of a PSD may allow lasers with non-gaussian intensity patterns to be used, without affecting output linearity. The PSD may integrate the spot intensity pattern and output the calculated position of the intensity centroid. So long as the spot is not too large, the position may still be determined even if the illuminating light beam is asymmetric or has multiple intensity peaks. Since the differential refractive index detector may only be interested in spot movement relative to a baseline position, the absolute position uncertainty may not impact the output.

The computing device may be configured to apply a correction to the output of the scattered angle detector, the correction being based upon the determined refractive index of the sample within the flow cell, the correction being used to at least partially correct for a deflection of the illuminating light beam.

The scatter angle (associated with each of the scattered light detectors) should be measured relative to the optical axis of the light that generates the scattering. However, differences in RI within the flow cell may result in refraction of the illuminating light beam prior to the scattering. I.e., the light beam as it interacts with the sample in the flow cell may no longer be parallel to a centreline measured from the light source. Thus, the scattered light detector(s) may detect light from a slightly different angle than expected, resulting in an error. The calculated RI may be used to correct this error; the angle of the beam illuminating the particles may be calculated and used to correct the scattering angle.

The fluid chromatography device may further comprise a first optical fibre optically coupled to a first end of the flow cell and to the UV light source, thereby communicating UV light from the UV light source to the flow cell. The fluid chromatography device may further comprise a second optical fibre coupled to a second end of the flow cell and to the UV absorption detector, thereby communicating the transmitted UV light portion to the UV absorption detector.

The use of optical fibres for communicating the UV light to and/or from the flow cell may provide for a convenient way to couple the UV light source and/or the UV absorption detector to the flow cell. E.g., the number of optical elements associated with the UV path may be reduced. The optical fibres may comprise additional optics. For example, a collimating lens (e.g., a sapphire sphere or GRIN lens) may be provided at ends of the optical fibres adjacent to the flow cell, such that a collimated UV beam is formed along the length of the flow cell.

The light source may be a laser. The illuminating light beam may have a visible or infrared wavelength.

The use of a laser may provide for a more uniform illuminating light beam and/or enable greater control over the region of the flow cell that is illuminated, compared to, for example, using a bulb and a slit/aperture. The light source may alternatively comprise an LED, for example. The laser may output an illuminating light beam with a wavelength between 640 and 650 nm, for example. Using a laser for RI measurement may provide greater control over the region of the flow cell that is illuminated, while keeping the light intensity high at the detector. Using the same illuminating light beam for both RI measurements and scattering may simplify the arrangement of the fluid chromatography detector compared to apparatuses that utilises a lamp, slits, lens, etc for RI measurements.

Any suitable UV light source may be used. The UV light source may produce a single fixed wavelength and may be selected based upon sample materials of interest. For example, the UV light source may be a mercury discharge lamp (producing a wavelength of 254 nm). Alternatively, the UV light source may be a broadband light source that produces multiple wavelengths of light - e.g., a deuterium lamp. Where a broadband UV light source is used, a monochromator may be used to select a narrow band of wavelengths which are then passed to the sample. Alternatively, the broadband light may be passed to the sample. The UV absorption detector may comprise a spectrometer, and an absorption (reduction in intensity) for a range of wavelengths may be inferred from the output of the spectrometer. A broadband UV light source/detector may be advantageous where a number of wavelengths are of interest.

The fluid chromatography detector may further comprise a long-pass filter arranged to prevent UV light scattered by the flow cell from being detected by the scattered light detector. The fluid chromatography detector may further comprise a short-pass filter arranged to prevent visible or infrared light scattered by the flow cell from being detected by the UV absorption detector.

The use of one or more filters may reduce cross contamination between the plurality of light sources and detector types of the present invention. The long-pass and/or short-pass filters may respectively filter at a wavelength between the UV wavelengths (approximately 100 to 400 nm) of the UV light source and the optical wavelengths (approximately 620 to 750 nm for red light) of the RI/scattering light source. The filters may comprise a dichroic coating on one of the components in each of the relevant detector types. For example, the UV absorption detector or the second optical fibre may comprise a short-pass filter (e.g., < 400 to 450 nm) so that any scattered red light does not affect the UV absorption detector. Likewise, the RI detector and/or the scatter angle detector may comprise a long-pass filter (e.g., > 400 to 450 nm) so that any UV or short visible wavelength light scattered from the sample does not affect said detectors.

The light sources may be provided with filters. The UV light source or the first optical fibre may comprise a short-pass filter, so that any red/visible light produced by the UV light source does not enter the flow cell. This may be particularly advantageous where the UV light source comprises a deuterium lamp, due to the strong spectrum line at 655 nm. The light source for generating the illuminating light beam (e.g., a laser) may comprise a filter and/or one-way optics, so as to prevent reflections or backscatter from reaching the light source. This may reduce variation in the illuminated light beam (e.g., unwanted resonances where the light source is a cavity laser).

The flow cell may comprise:

a sample volume for receiving the sample from the separation column; and
a reference volume configured to contain a reference fluid,

wherein the flow cell may be arranged such that the illuminating light beam passes through the reference volume prior to illuminating the sample within the sample volume.

Providing a reference volume and a sample volume may enable differential refractive index measurements to be taken, which may increase the simplicity with which the RI of the sample can be determined. If the sample and the reference fluid have similar refractive indices (e.g., comprise the same eluent), the refracted light portion may be deflected linearly in proportion to the RI difference.

The particle property determined by the computing device may include a size (or size distribution) of the plurality of particles. One or more computing devices may be connected to each of the detectors of the fluid chromatography detector. As discussed above, the fluid chromatography detector may be regarded as a multidetector system comprising a plurality of detector types arranged around a single flow cell. Outputs of each of the detector type may be processed using any known analysis techniques to determine properties of the sample. For example, the output of the scattered light detector of the fluid chromatography detector may be analysed in the same way as the output of a conventional, standalone scattered light detector (e.g., to determine a particle size based upon the scattering pattern).

According to a fourth aspect, there is provided a fluid chromatography system comprising:

a fluid chromatography detector;
a separation column;
an injector or pump configured to provide a sample to an inlet the separation column; and
a conduit configured to fluidly couple an outlet of the separation column to the inlet of the flow cell.

The fluid chromatography detector of the fluid chromatography system may be according to the first, second or third aspect.

The separation column may be any suitable separation column utilised in fluid chromatography. The separation column may be chosen based on the behaviour of the sample through the column. A material within the column may be chosen based upon expected interactions between the column material and the particles within the sample, so that the sample is separated into discrete bands. The interactions can be chemical or physical and any type of column can be used (e.g., normal phase, reverse phase, ion exchange, size exclusion, etc.

The injector/pump may be chosen to provide a required steady volume flowrate at the pressure needed to drive the sample flow through the separation column and fluid chromatography detector. Any suitable fluid pumping apparatus may be used. At least part of the system (i.e., detector, separation column, and/or pump) may be housed in temperature-controlled enclosure. This may reduce or eliminate temperature dependence in the interactions between the separation column and/or the analysis of the sample flow within the fluid chromatography detector.

The fluid chromatography the system may be a high-pressure liquid chromatography (HPLC) system.

**DETAILS DESCRIPTION OF DRAWINGS**

Embodiments of the invention will now be described, by way of example only, with reference to the accompanying drawings:

Figure 1 shows a schematic diagram of a fluid chromatography system;

Figure 2 shows a schematic diagram of refracted and scattered light in a flow cell;

Figure 3 shows an isometric view of an example fluid chromatography detector;

Figure 4 shows an isometric view of a RALS apparatus;

Figure 5 shows a schematic diagram of the RALS apparatus shown in Figure 4;

Figure 6 shows an isometric view of a LALS apparatus;

Figure 7 shows a schematic diagram of the LALS apparatus shown in Figure 6;

Figure 8 shows an isometric view of a flow cell with a UV absorption apparatus; and

Figure 9 shows a cross-section of a flow cell and UV absorption apparatus.

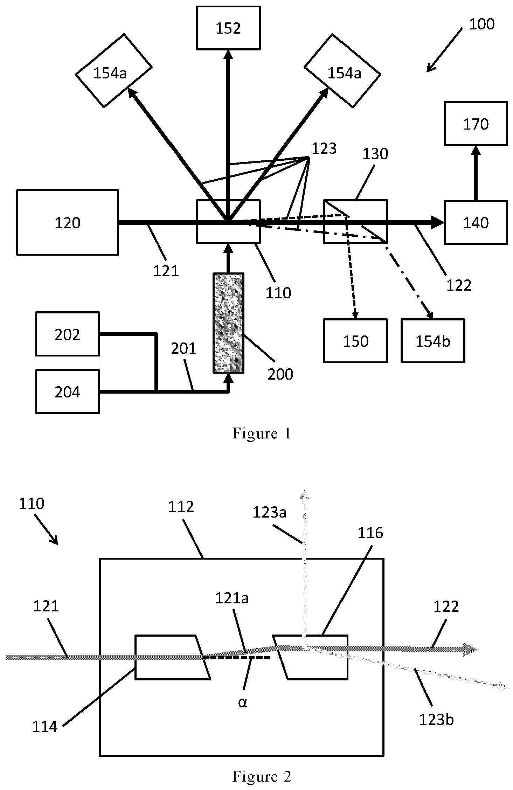

Referring to Figure 1, an example of a fluid chromatography detector 100 is shown. The fluid chromatography detector comprises: flow cell 110, light source 120, reflector 130, refractive index detector 140, scattered light detectors 150, 152, 154a, 154b and computing device 170.

The fluid chromatography detector 100 is fluidly coupled to a fluid sample apparatus so as to provide a fluid chromatography system. The fluid sample apparatus of this example comprises a separation/analysis column 200, an eluent supply 202 and a sample injector 204, said components being fluidly coupled via conduit 201. The eluent supply 202 may be provided via a pump, said pump being controlled to provide a known flowrate. A plurality of particles is injected into the eluent via the sample injector 204, thereby providing a flow of sample comprising a plurality of particles suspended in the eluent fluid. This flow of sample is passed through the separation column 200. The system may be configured for performing High Pressure Liquid Chromatography (HPLC).

The separation column 200 may be suitably configured based upon the sample that is to be analysed. A column material - e.g., a bed of material within the column over/through which the sample flow passes - may be chosen to ensure sufficient separation of different particles within the sample. For example, the fluid chromatography system may be used for gel permeation chromatography (GPC)/ size exclusion chromatography (SEC). In such an example, the separation column 200 comprises polymer beads. This technique relies on physical diffusion of particles in the sample flow into voids in the surface of the polymer beads (rather than a surface chemical interaction, as with many other HPLC techniques). The polymer beads are packed tightly into a hollow tube or column, and fluid containing the sample is forced through the packed bed of beads. The resolution of GPC may be improved by using a smaller bead size, thereby increasing the wetted polymer surface area and reduce gap size between the beads. To achieve the required flowrate for typical fluid chromatography methods with the smaller polymer beads, a higher fluid pressure may be required. For a separation column 200 comprising a small diameter column with 2-micron polymers beads, a fluid pressure of 1200 bar may be used to achieve a minimum desirable sample flowrate of 1 mL/minute.

The separation column 200 may be part of a commercially available separation apparatus, such as an OMNISEC RESOLVE system from Malvern Panalytical. The separation apparatus may comprise further components in addition to the separation column 200, such as :

i) a degasser, configured to degas the eluent fluid;
ii) an isocratic pump, configured to provide a stable flow rate of sample through the separation column and prevent backwash;
iii) an autosampler, configured to store a plurality of particle samples (e.g., in a temperature-controlled enclosure), select and extract a particle sample, and inject the particle sample into the eluent fluid; and/or
iv) a column oven configured to maintain a stable temperature in the separation column 200.

The flow cell 110 has an inlet and an outlet. The output of the separation column 200 is fluidly coupled to the inlet of the flow cell 110, thereby producing a flow of the sample through the flow cell 110.

In an example, the light source 120 is a laser with a wavelength of 640 to 650 nm. The light source 120 produces an illuminating light beam 121 that illuminates the sample flow within the flow cell 110. The illuminating light beam 121 interacts with the fluid and/or the particles within the sample. The illuminating light beam 121 may be refracted, dependent upon differences in refractive index of the sample and the flow cell 110 (discussed further below), thereby producing a refracted light portion 122. Depending upon the sample and/or the flow cell 110 configuration, the refracted light portion 122 will generally be a beam that has been deflected from the optical axis pathway of the illuminating light beam 121.

Part of the illuminating light beam 121 may be scattered by the particles within the sample, dependent upon the size of the particles and the wavelength of the illuminating light beam 121, thereby producing a scattered light portion 123. The scattered light portion 123 may be regarded as a plurality of scattered beams at different scattering angles, the intensity of which will be dependent upon the scattering pattern of the particles (determined by the size of the particles and the wavelength of the illuminating light beam 121).

In the example of Figure 1, the reflector 130 is configured to reflect part of the scattered light portion 123 (i.e., low angle scattered light), while allowing the refracted light portion 122 to continue along its beam path. The refracted light portion 122 is detected by a refractive index (RI) detector 140 that is arranged behind the reflector 130.

The scattered light detector in this example comprises a plurality of detector elements/sensors arranged at one or more scattering angles around the flow cell 110. In this example, the scattered light detector comprises a low-angle light scattering (LALS) detector 150 and a right-angle light scattering (RALS) detector 152. The LALS detector 150 is arranged to detect a sub-portion of the scattered light portion 123 that is reflected by the reflector 130. For example, the LALS detector may be a 7 degree scatter angle detector, the scatter angle being measured relative to the optical axis of the illuminating light beam 121. The RALS detector is be arranged to detect a sub-portion of the scattered light portion 123 that is scattered by the sample within the flow cell 110 at an angle of approximately 90 degrees relative to the optical axis of the illuminating light beam.

In this example, the scattered light detector is a multi-angle light scattering (MALS) detector; i.e., the scattered light portion 123 is detected at a plurality of scatter angles using a plurality of detector elements. High-angle light scattering (HALS) detectors 154a are be provided for detecting sub-portions of the scattered light portion 123 at other high scatter angles (e.g., other angles than 90 degrees). Additional LALS detectors 154b may be provided for detecting multiple sub-portions of the scattered light portion 123 at various scattering angles. Additional optical elements/masks (not shown) may be provided to ensure that the light from various scatter angles is detected at the corresponding detector elements.

The computing device is shown in Figure 1 coupled to an output of the RI detector 140. The computing device 140 may also receive an output from the scattered light detector (e.g., each of the detector elements 150 - 154) and a UV absorption detector (not shown). The computing device 170 may comprise any suitable computer/processor. The computing device may be configured to receive the output of each of the detectors and calculate a relevant parameter and/or determine a particle property. For example, the computing device 170 may calculate the RI of the sample based upon a perceived position of the refracted light portion 122 on the RI detector 140. Based upon the calculated RI, the computing device 170 may then determine a concentration of the sample within the flow cell 110.

The computing device 170 may comprise one or more commercially available analysis systems that are configured to analyse the output of the various detector types discussed herein. The computing system 170 may be configured similarly to the OMNISEC REVEAL system from Malvern Panalytical. The combination of detector types provided by the fluid chromatography detector 100 may enable various sample/particle characteristics to be determined. The outputs of two or more detector types may be combined to enable further characteristics to be determined. For example, the following characteristics may be determined:

i) a sample concentration, based upon the measured RI;

ii) a concentration of co-polymers and/or impurities, based upon the measured UV absorption;

iii) absolute molecular weight of particles within the sample, based upon light scattering measurements;

iv) a hydrodynamic radius of particles within the sample (characteristic of particle size), a radius of gyration and/or Mark-Houwink parameters, based upon a combination of detector outputs.

An output of the flow cell 110 may be fluidly coupled to further flow cells/detection apparatuses. For example, the sample flow may also pass through a viscometer, which may be used to determine an intrinsic viscosity of the sample.

Referring to Figure 2, a top-down view of an example flow cell 110 is shown. The flow cell 110 comprises a body 112. The 112 body may be made from quartz. Within the body 112, two voids are provided which form a reference volume 114 and a sample volume 116. The cross section of each of the reference volume 114 and the sample volume 116 may be a truncated isosceles right-angle triangle, with the adjacent faces of the volumes 114, 116 inclined at the same angle. The reference volume 114 may be a simple receptacle for holding a reference sample (for example, the eluent that is used for the sample comprising a plurality of particles suspended in a fluid). The sample volume 116 comprises an inlet and an outlet and is fluidly coupled to a separation column. The sample may flow along the length of the sample volume 116, e.g., into or out of the drawing as shown in Figure 1.

The illuminating light beam 121 enters the flow cell body 112 from the left side and passes into the reference volume 114. The illuminating light beam 121 defines a reference optical axis $\alpha$ which is nominally normal to the flow cell 110. Where the entry face of the reference volume 114 is normal to the illuminating light beam 121, no refraction occurs. On leaving the reference volume 114 the deflected illuminating light beam 121a is bent upwards slightly due to the refractive index difference between the reference fluid in the reference volume 114 and the body 112 (e.g., quartz). When the intermediary beam 121a enters the sample volume 116 the beam is bent downwards due to the refractive index between the sample in the sample volume 116 and the body 112. If the reference fluid and the sample have exactly the same refractive index the beam deflections will be equal and opposite. A refracted light portion beam 122 will exit normal to the sample volume 116 and body exit face and emerge from the flow cell 110 parallel to the optical axis $\alpha$ of the illuminating light beam 121. There may be a small sideways translation of the beam, depending on the refractive index difference between the body 112 and the eluent (the reference fluid).

If the sample fluid has a slightly higher refractive index than the reference, the refracted light portion 122 will be bent downwards by a slightly smaller angle, as the refractive index difference between the sample and the body 112 is slightly less that the refractive index difference between the reference fluid and the body 112. This will cause the refracted light portion 122 to exit the flow cell 110 with a slight positive gradient as viewed in Figure 2. Vice versa is true where the reference fluid has a slightly lower refractive index than the sample. For small refractive index differences, the angular deflection of the refracted light beam 122 can be taken as proportional to the refractive index difference between the reference fluid and the sample. The position of the refracted light beam 122 can be detected by a refractive index detector. The RI of the sample may be determined based upon the change in the position.

As shown in Figure 2, the light that causes the scattering within the sample volume 116 may not be parallel to the optical axis $\alpha$ (i.e., the system centreline), depending upon the difference in RI between the sample and the reference fluid. Thus, there may be a small error in the actual angles at which the scattered light portion 123 is detected - the assumed angle may be relative to the optical axis $\alpha$. The error may be negligibly small. The angular full-scale deflection of an example differential RI detector may be between 0.01 and 0.08 degrees. The scattered light detector(s) may have a field of view of $\pm$ 2 degrees. Since the scattered light detector is already integrating across a range of angles between 50 to 400 times the RI induced error, the error in scatter angle may not be significant. Nonetheless, a measured angle of the refracted light portion may be determined from the position of the refracted light portion 122 recorded on the differential RI detector. This measured angle may be backpropagated to determine the angle of the illuminating light beam through the sample volume 116, thereby allowing for the scatter angle to be corrected. The correction of the scatter angle may enable more accurate determination of particle parameters, e.g., molecular weight or particle size. Such a correction may be particularly advantageous when measuring larger particles (e.g., having a diameter greater than one tenth the wavelength of the illuminating light beam) due to finer angular dependence in the scattering pattern compared to smaller particles.

Still referring to Figure 2, the particles within the sample may scatter some of the illuminating light beam 121 (the scattering being dependent upon the size of the particles and the wavelength of the illuminating light) resulting in a scattered light portion. Different sub-portions of the scattered light portion may be detected by one or more scattered light detectors. For example, a first sub-portion 123a corresponding to 90 degree scattered light may be detected by a RALS detector, while a second sub-portion 123b corresponding to low-angle (e.g., 7 degree) scattered light may be detected by a LALS detector.

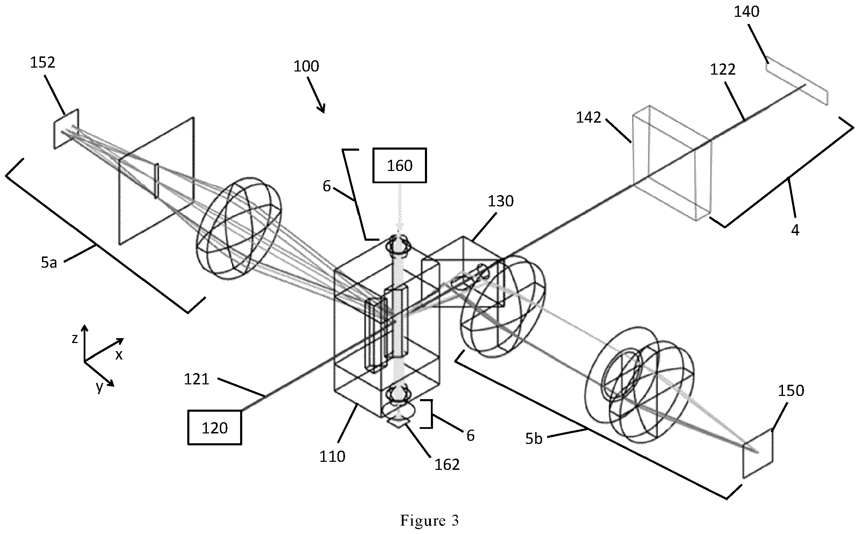

Referring to Figure 3, a further example of a fluid chromatography detector 100 is shown. The fluid chromatography detector 100 may generally be regarded as comprising a plurality of detector types/apparatuses arranged around a single flow cell 110. Each of the detector types will be explained in further detail. In this example, the fluid chromatography detector 100 comprises:

    i) A light source 120 (e.g., a laser) configured to provide an illuminating light beam 121 to the flow cell 110. The illuminating light beam 121 has an optical axis (e.g., the x axis), which may be perpendicular to the direction of sample flow through the flow cell 110 (e.g., flow along the z axis).
    ii) A reflector 130 arranged to reflect at least part of a scattered light portion 123 and to not reflect a refracted light portion 122.
    iii) A refractive index (RI) apparatus 4 (discussed further below).
    iv) A high-angle or right-angle light scattering (HALS/RALS) apparatus 5a arranged to detect a sub-portion of the scattered light portion that is scattered at a high scattering angle (relative to the x axis). The HALS/RALS apparatus 5a comprises a HALS/-RALS detector 152.
    v) A low-angle light scattering (LALS) apparatus 5b arranged to detect a sub-portion of the scattered light portion that is scattered at a low scattering angle (relative to the x axis) and reflected by the reflector 130. The LALS apparatus 5b comprises a LALS detector 150.
    vi) A UV absorption apparatus 6 comprising a UV light source 160 and a UV absorption detector 162. UV light may be provided along the flow cell 110 parallel to the direction of sample flow through the flow cell 110.

The detector arrangement and/or the separation column that are used may be chosen based upon: the sample to be analysed; the expected interactions between the sample and the materials of the separation column and/or the wavelengths of light used; and the properties of the sample to be determined. For example, it may be desirable to determine the proportion of a monomer within a given protein sample. If the protein forms dimer and trimer structures from the base monomer, a size exclusion analytical column may be provided to separate these structures by size, allowing the trimer to discharge first, followed by the dimer and finally the monomer. When measuring a protein, the RI detector 140 may be used at a point location of the sample flow within the flow cell 110 to indicate sample concentration. A computing device coupled to the RI detector 140 may be able to report the separate concentrations of the three protein structures as the bands of material pass through the flow cell, thereby allowing a user to calculate the relative proportions of monomer, dimer and trimer within the sample.

The RI apparatus 4 comprises an RI detector 140. The RI detector 140 is arranged to detect the refracted light portion 122 and analyse a position thereof. Changes in the refractive index of the sample will cause a lateral movement (in the y axis) of the position of the refracted light portion. A computing device may be configured to analyse said changes and determine the refractive index of the sample. An alignment element/zero glass 142 may be provided between the flow cell 110 and the RI detector 140. The zero glass 142 may comprise a quartz element and may be varied in angle (e.g., using a motor and a controller) in order to translate the refracted light beam 122 in the lateral direction, thereby compensating for a translation of the beam as it transits the flow cell 110 due to differences in RI. The zero glass 142 may thus translate to refracted light beam to a reference/baseline position of the RI detector 140. The RI detector may comprise a position sensitive device with a width (in the y direction) sufficient to handle a maximum expected deflection of the refracted light portion. In differential refractive index measurement, only the change in position may be required, rather than an absolute measurement of the refracted light portion 122 position, in which case the zero glass 142 may not be required.

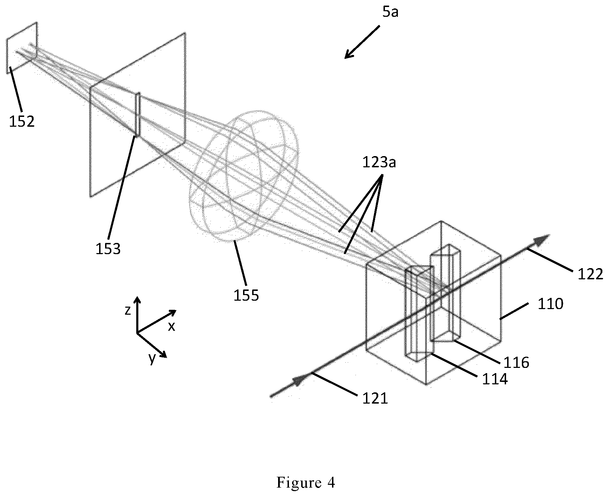

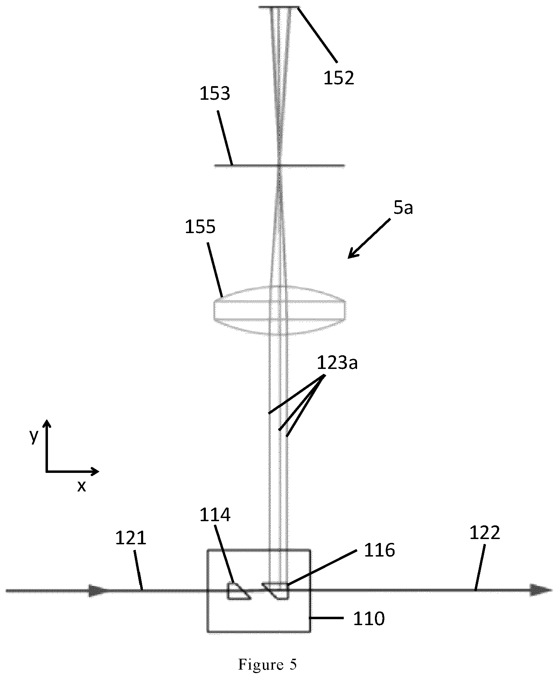

Referring to Figures 4 and 5, an example of a RALS apparatus 5a is shown. The illuminating light beam 121 enters the flow cell 110, first passing through the reference volume 114 and then the sample volume 116. Some of the light is refracted by the flow cell/sample, thereby producing a refracted light portion 122. Part of the light may be scattered by particles in the sample, thereby generating a scattered light portion emanating from the sample volume 116. The scattered light portion may scatter at a range of angles (dependent upon the particles' scattering pattern to the illuminating light beam). A sub-portion 123a of the scattered light portion may be scattered at approximately 90 degrees relative to the optical pathway.

The 90 degree sub-portion 123a is detected by a RALS detector 152. The RALS apparatus 5a comprises a transform lens 155 configured to collect the sub-portion 123a and focus said scattered light onto the RALS detector 152. The RALS apparatus 5a further comprises a slit-shaped aperture 153. Light scattered at 90 degrees from the sample volume 116 will form a plane normal to the optical axis of the illuminating light beam 121 (a special example of the cone-shaped scatter discussed below). The amount of this light that is detected is controlled by the length of the slit in the y direction. In the example of Figure 4, the RALS detector 152 collects a 14-degree fan of rays, representing 3.9% of the total scattered light. The range of scattering angles that are collected by the RALS detector 152 is controlled by the width of the slit 153 in the x direction.

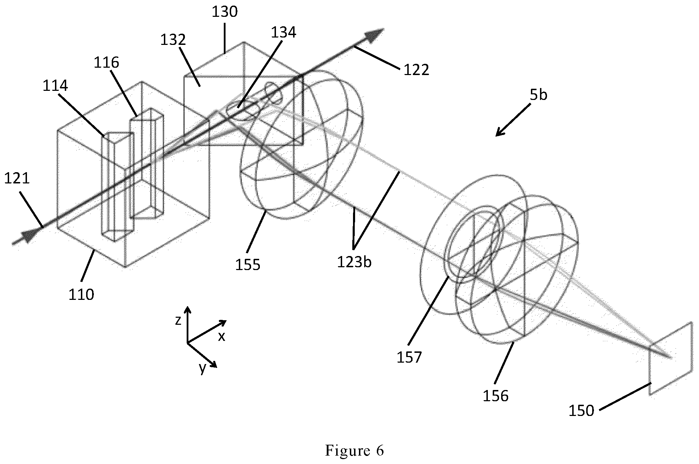

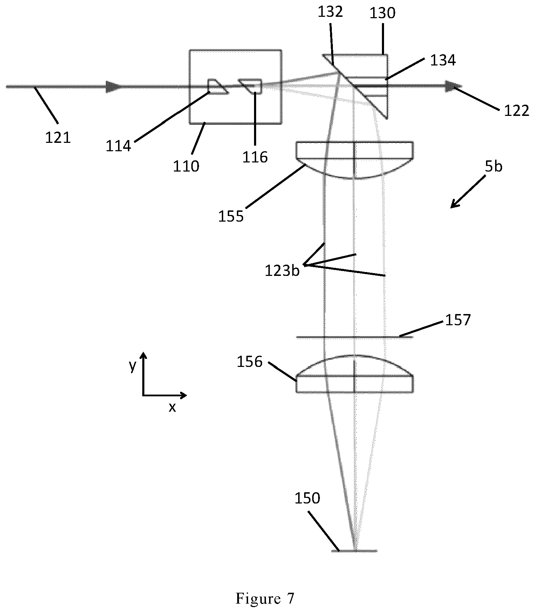

Referring to Figures 6 and 7, an example of a LALS apparatus 5b and a reflector 130 are shown. The refraction/scattering of the illuminating light beam 121 by the flow cell 110 is similar to as described above for Figures 4 and 5.

The reflector 130 comprises a reflective surface 132 and a hole 134 through the reflector 130. The reflector 130 is arranged such that the refracted light portion 122 passes through the hole 134, such that it can be detected at an RI detector (not shown).

A sub-portion 123b of the scattered light portion may be scattered at a low scatter angle (e.g., 7 degrees) relative to the illuminating light beam in the sample. The low-angle sub-portion 123b is reflected by the reflective surface 134 (so that the reflector 130 functions as a fold mirror) and detected by the LALS detector 150. The LALS apparatus 5b comprises a transform lens 155 and a collector lens 156 configured to collect the sub-portion 123b and focus said scattered light onto the LALS detector 150. The LALS apparatus 5b further comprises an annular aperture 157.

Light scattered at a given scattering angle describes a cone centred about the optical axis of the illuminating light beam 121, thus falling as a circle on a plane (e.g., the reflective surface 132). Due to the reflector 130, for the LALS detector 150, the sub-portion 123b of the scattered light portion appears to come from a point on the LALS detector optical axis. The angular aperture mask 157 is placed at a distance behind the transform lens 155 equal to the lens' focal length. Thus, the angular aperture 157 is effectively at the focal plane for light arriving at the lens 155 from infinity. Light parallel to the optical axis of the LALS detector 150 will be focused to a point in the centre of the mask 157. Light arriving at the lens 155 with angle θ to said optical axis will be focused to a point on a circular line whose radius is given by:

$$radius = Focal\ Length \times Tan(\theta)$$

The location of the focus point depends on the rotation of the inclined ray around the optical axis. The complete set of scattered light for a given scatter angle will therefore describe a circle. The corresponding annular aperture 157 will thus allow all of the light scattered at said angle to be detected by the LALS detector 150. The range of scattering angles that are collected at the LALS detector 150 is controlled by the width of the annular aperture 157 between the inner and outer radii of the aperture.

Similar masks/lens may be used for other scattered light detectors placed at intermediate angles. With the lens and mask placed along the angled centreline, the aperture in the mask may be a partial section of a conic projection. As with the RALS apparatus 5a shown, it may only be practical to collect part of the scattered light portion without interfering with other parts of the system.

As discussed above, light scattered by particles with a diameter more than approximately one tenth of the light wavelength varies in intensity with the scatter angle measured from optical axis of the illumination. The light intensity distribution with scatter angle may contain information about the size of the particle, and so it may be desirable to know the scattering intensity at a specific angle. This may be achieved by using the slit and annular apertures discussed above for the RALS and LALS apparatuses. Equivalent masks may be used for scattered light detectors at other angles. Generally, a scattered light detector is designed to collect as large a solid angle of light as possible, in order to provide better signal to noise ratio. The angular range may depend on the scattering behaviour that will be observed (e.g., the size of the particles and wavelength, and thus the angular dependence of the scattering intensity). The scattered light detector may integrate the intensity over its field of view, so for the averaged intensity to represent the intensity of the centre angle:

$$\frac{dI}{d\theta} \approx constant\ over\ FOV$$

assuming the intensity I response of the detector is symmetric about the angle $\theta$. The curvature in the intensity plot with angle may dictate the width of the field of view for a detector and may be different for different locations on the scattering sphere, wavelengths and particle size.

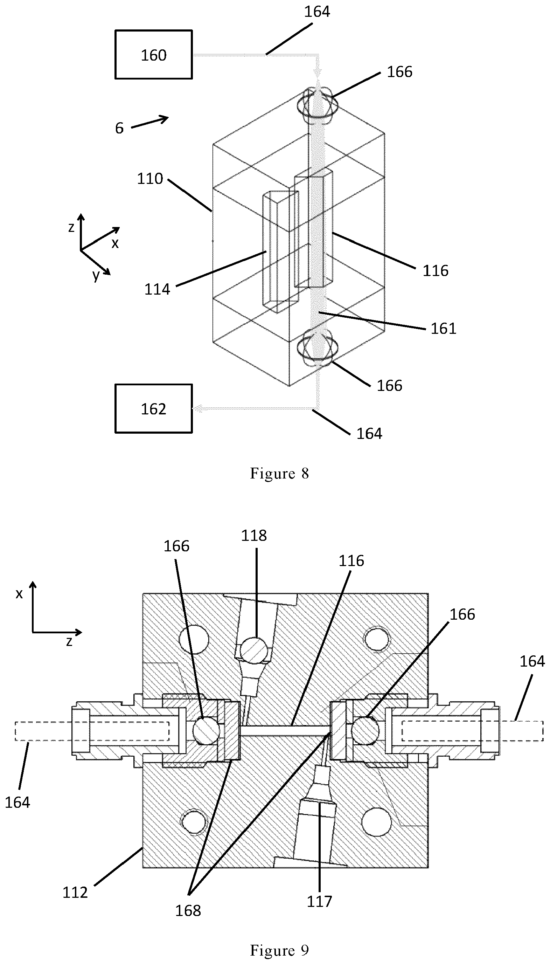

Referring to Figures 8 and 9, an example of a UV absorption apparatus 6 is shown. The UV absorption apparatus 6 is integrated into the same flow cell 110 as the RI apparatus 4 and/or the RALS apparatus 5a/LALS apparatus 5b discussed above. The sample volume 116 is generally tube like. A fluid inlet 117 is located near to a first end of the sample volume 116 and configured to receive a sample flow from a separation column. A fluid outlet 118 (e.g., a one-way valve) is located near to a second end of the sample volume 116. The sample may flow through the sample volume 116 along the length of the sample volume 116 (i.e., along the z direction). The sample volume 116, inlet 117 and/or outlet 118 may be configured to reduce separation and/or mixing of the sample as it flows through the sample volume 116.

UV light, from a UV light source 160, is provided at one end of the sample volume 116. The UV light passes through the sample volume (parallel to the direction of the sample flow), exiting the sample volume at an opposing end. Depending upon the absorption properties of the sample, a transmitted UV light portion 161 is detected by a UV absorption detector 162. The intensity of the transmitted UV light portion 161 may be determined by a computing device configured to receive an output of the UV absorption detector 162, which may in turn be used to determine a property of the sample.

The UV light source 160 and/or the UV absorption detector 162 may be coupled to the sample volume 116 via optical fibres. Collimating lenses 166 (e.g., sapphire balls) may be provided at the ends of the optical fibres 164 so that the UV light transiting the sample volume 116 is a collimated beam. This may reduce reflections or scattering of UV light within the sample volume. For example, the UV light within the flow cell 110 may be a 10 mm beam. Windows 168 or additional optics (e.g., filters) may be provided at the ends of the sample volume 116 and may assist in coupling the UV light to the sample therein.

The RI apparatus 4, the RALS apparatus 5a and the LALS apparatus 5b may comprise a long-pass filter. For example, each of the detectors in said apparatuses may include a filter that allows wavelengths greater than ~ 450 nm to pass, such that refracted/scattered light portions 122, 123 can be detected. Similarly, the detector of the UV absorption apparatus 6 may comprise a short-pass filter, e.g., a filter that allows wavelengths less than - 450 nm to pass, such that the transmitted UV light portion 161 can be detected. These filters may be provided elsewhere other than on/in the detectors (e.g., as separate components, on the lenses or on the optical fibres). The UV light source 160 may also comprise a short-pass filter so as to filter out optical wavelengths that may interfere with the RI/scattering analysis.

Although example embodiments have been described, these are not intended to limit the scope of the invention, which should be determined with reference to the accompanying claims.

## Claims

1. A fluid chromatography detector, comprising:

a flow cell for receiving a flow of a sample from a separation column, the sample comprising a plurality of particles suspended in a fluid and the flow cell comprising an inlet and an outlet; a light source configured to illuminate the sample within the flow cell with an illuminating light beam, thereby generating a refracted light portion resulting from refraction of the illuminating light beam, and a scattered light portion resulting from scattering of the illuminating light beam by the plurality of particles in the flow cell in a direction different to that of a propagation direction of the refracted light portion in the sample; a reflector configured to reflect either the refracted light portion or the scattered light portion; a refractive index detector configured to detect at least part of the refracted light portion; a scattered light detector configured to detect at least part of the scattered light portion; and a computing device configured to determine the refractive index of the sample within the flow cell based on an output from the refractive index detector and to determine a particle property based on an output from the scattered light detector.

2. The fluid chromatography detector of claim 1, further comprising:

a UV light source configured to illuminate the sample within the flow cell, thereby generating a transmitted UV light portion, an intensity of the transmitted UV light portion being dependent upon an absorbance of the sample within the flow cell to UV light; and
a UV absorption detector configured to detect at least part of the transmitted UV light portion.

3. A fluid chromatography detector, comprising:

a flow cell for receiving a flow of a sample from a separation column, the sample comprising a plurality of particles suspended in a fluid and the flow cell comprising an inlet and an outlet;
a light source configured to illuminate the sample within the flow cell with an illuminating light beam, thereby generating a refracted light portion resulting from refraction of the illuminating light beam, and a scattered light portion resulting from scattering of the illuminating light beam by the plurality of particles in the flow cell in a direction different to that of a propagation direction of the refracted light portion in the sample;
a UV light source configured to illuminate the sample within the flow cell, thereby generating a transmitted UV light portion, an intensity of the transmitted UV light portion being dependent upon an absorbance of the sample within the flow cell to UV light, wherein the UV light source illuminates the sample within the flow cell from a direction parallel to a flow direction of the sample between the inlet and the outlet;
a scattered light detector configured to detect at least part of the scattered light portion;
a UV absorption detector configured to detect at least part of the transmitted UV light portion; and
a computing device configured to determine a particle property based on an output from the scattered light detector.

4. A fluid chromatography detector, comprising:

a flow cell for receiving a flow of a sample from a separation column, the sample comprising a plurality of particles suspended in a fluid and the flow cell comprising an inlet and an outlet;
a light source configured to illuminate the sample within the flow cell with an illuminating light beam, thereby generating a scattered light portion resulting from scattering of the illuminating light beam by the plurality of particles in the flow cell;
a UV light source configured to illuminate the sample within the flow cell, thereby generating a transmitted UV light portion, an intensity of the transmitted UV light portion being dependent upon an absorbance of the sample within the flow cell to UV light, wherein the UV light source illuminates the sample within the flow cell from a direction parallel to a flow direction of the sample between the inlet and the outlet;
a scattered light detector configured to detect at least part of the scattered light portion;
a UV absorption detector configured to detect at least part of the transmitted UV light portion; and
a computing device configured to perform a dynamic light scattering, DLS, analysis to determine a particle property from an output of the scattered light detector.

5. The fluid chromatography detector of claim 3 or claim 4, further comprising:

a reflector configured to reflect either a refracted light portion or the scattered light portion, the refracted light portion resulting from refraction of the illuminating light beam; and
a refractive index detector configured to detect at least part of the refracted light portion;
wherein the computing device is further configured to determine the refractive index of the sample within the flow cell based on an output from the refractive index detector.

6. The fluid chromatography detector of any of claims 1, 2 or 5, wherein the reflector comprises a reflective surface and a hole extending through the reflective surface, wherein the reflector is arranged such that the refracted light portion passes through the hole and at least part of the scattered light portion is reflected by the reflector;

wherein, optionally or preferably, the scattered light detector comprises a low-angle light scattering, LALS, detector arranged to detect the scattered light portion that is reflected by the reflector; and
wherein, further optionally or preferably, the fluid chromatography detector further comprises a spatial filter arranged so as to only allow a sub-portion of the scattered light portion that is reflected by the reflector to be detected by the LALS detector, the sub-portion corresponding to light scattered at a range of angles between a minimum scatter angle and a maximum scatter angle relative to an optical path of the illuminating light beam.

7. The fluid chromatography detector of any preceding claim, wherein the scattered light detector comprises a right-angle light scattering, RALS, detector arranged to detect a sub-portion of the scattered light portion that is scattered at an angle of approximately 90 degrees relative to an optical path of the illuminating light beam; and

wherein, optionally or preferably, the fluid chromatography detector further comprises an aperture configured to block part of the scattered light portion so that the sub-portion detected by the RALS detector corresponds to light scattered within a predetermined range of 90 degrees relative to an optical path of the illuminating light beam.

8. The fluid chromatography detector of any preceding claim, wherein the scattered light detector is a multi-angle light scattering, MALS, detector comprising at least five detector elements, each detector element being arranged to detect a sub-portion of the scattered light portion that has been scattered at a different angle relative to an optical path of the illuminating light beam.

9. The fluid chromatography detector of any preceding claim, further comprising a lens, the lens being configured to focus a sub-portion of the scattered light portion onto the scattered light detector.

10. The fluid chromatography detector of any preceding claim, wherein:

    the scattered light detector comprises a dynamic light scattering, DLS, detector; and
    the computing device is configured to perform a dynamic light scattering, DLS, analysis to determine a particle property from an output of the DLS detector; wherein, optionally or preferably, the scattered light detector further comprises a static light scattering, SLS, detector; and wherein, further optionally or preferably:

    (i) the SLS detector and the DLS detector are arranged to detect different sub-portions of the scattered light portion that have been scattered at different angles relative to an optical path of the illuminating light beam; or
    (ii) the fluid chromatography detector further comprises a beam splitter configured to split at least part of the scattered light portion into a first part and a second part, wherein the SLS detector is arranged to detect the first part and the DLS detector is arranged to detect the second part.

11. The fluid chromatography detector of any of claims 1, 2 or 5 to 10, wherein:

    the refractive index detector is a differential refractive index detector; and
    the computing device is configured to determine the refractive index of the sample within the flow cell based upon a change in the position of the refracted light portion relative to a baseline position; and

    wherein, optionally or preferably:

    (i) the differential refractive index detector comprises at least two detector elements, and wherein the fluid chromatography detector further comprises an alignment element configured to selectively translate the position of the refracted light portion relative to the at least two detector elements; or
    (ii) the differential refractive index detector comprises a position sensitive device.

12. The fluid chromatography device of any of claims 1, 2 or 5 to 11, wherein the computing device is configured to apply a correction to the output of the scattered angle detector, the correction being based upon the determined refractive index of the sample within the flow cell, the correction being used to at least partially correct for a deflection of the illuminating light beam.

13. The fluid chromatography device of any of claims 2 to 12, further comprising:

    a first optical fibre optically coupled to a first end of the flow cell and to the UV light source, thereby communicating UV light from the UV light source to the flow cell; and
    a second optical fibre coupled to a second end of the flow cell and to the UV absorption detector, thereby communicating the transmitted UV light portion to the UV absorption detector.

14. The fluid chromatography detector of any of claims 2 to 13, further comprising:

    a long-pass filter arranged to prevent UV light scattered by the flow cell from being detected by the scattered light detector; and/or
    a short-pass filter arranged to prevent visible or infrared light scattered by the flow cell from being detected by the UV absorption detector.

15. The fluid chromatography detector of any preceding claim, wherein the flow cell comprises:

    a sample volume for receiving the sample from the separation column; and
    a reference volume configured to contain a reference fluid,

    wherein the flow cell is arranged such that the illuminating light beam passes through the reference volume prior to illuminating the sample within the sample volume.

Figure 1

Figure 2

Figure 3

Figure 4

Figure 5

Figure 6

Figure 7

Figure 8

Figure 9

**EUROPEAN SEARCH REPORT**

Application Number

EP 24 18 1265

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/099545 A1 (MALEEV IVAN [US] ET AL) 31 March 2022 (2022-03-31) | 1,4,6, 9-12,15 | INV. G01N30/74 |
| A | * paragraph [0018] - paragraph [0036]; figure 1A * | 2,5 | G01N15/0205 G01N21/53 |
| X | US 2004/011975 A1 (NICOLI DAVID F [US] ET AL) 22 January 2004 (2004-01-22) | 1,6,9 | |
| A | * paragraph [0251] - paragraph [0259]; figure 29 * | 2,5 | |
| X | US 2007/178013 A1 (KALONIA DEVENDRA S [US] ET AL) 2 August 2007 (2007-08-02) | 3,7 | |
| A | * paragraph [0054] - paragraph [0067]; figure 3A * | 2,5 | |
| X | US 2013/308121 A1 (SOME DANIEL I [US] ET AL) 21 November 2013 (2013-11-21) | 3,4,7,8, 13,14 | |
| A | * paragraphs [0001], [0025], [0029]; figures 3,6 * | 2,5 | |
| X | US 5 269 937 A (DOLLINGER GAVIN D [US] ET AL) 14 December 1993 (1993-12-14) | 3,7,14 | TECHNICAL FIELDS SEARCHED (IPC) |
| A | * column 20, line 21 - line 62; figure 12 * | 2,5 | G01N |

The present search report has been drawn up for all claims

| Place of search | Date of completion of the search | Examiner |
|---|---|---|
| Munich | 26 November 2024 | Gomez, Adriana |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 18 1265

This annex lists the patent family members relating to the patent documents cited in  the above-mentioned European search report.
The members are as contained in the European Patent Office EDP file on
The European Patent Office is in no way liable for these particulars which are merely given for the purpose of information.

26-11-2024

| Patent document cited in search report | | | Publication date | Patent family member(s) | | Publication date |
|---|---|---|---|---|---|---|
| US 2022099545 | A1 | | 31-03-2022 | TW | 202229843 A | 01-08-2022 |
| | | | | US | 2022099545 A1 | 31-03-2022 |
| | | | | WO | 2022066279 A1 | 31-03-2022 |
| US 2004011975 | A1 | | 22-01-2004 | AU | 2003239583 A1 | 09-02-2004 |
| | | | | CN | 1682105 A | 12-10-2005 |
| | | | | CN | 103792168 A | 14-05-2014 |
| | | | | EP | 1535040 A1 | 01-06-2005 |
| | | | | EP | 2388569 A1 | 23-11-2011 |
| | | | | JP | 4808963 B2 | 02-11-2011 |
| | | | | JP | 4950314 B2 | 13-06-2012 |
| | | | | JP | 2005533262 A | 04-11-2005 |
| | | | | JP | 2010164572 A | 29-07-2010 |
| | | | | US | 2004011975 A1 | 22-01-2004 |
| | | | | US | 2005021244 A1 | 27-01-2005 |
| | | | | US | 2007010974 A1 | 11-01-2007 |
| | | | | WO | 2004010113 A1 | 29-01-2004 |
| US 2007178013 | A1 | | 02-08-2007 | NONE | | |
| US 2013308121 | A1 | | 21-11-2013 | NONE | | |
| US 5269937 | A | | 14-12-1993 | AT | E147161 T1 | 15-01-1997 |
| | | | | CA | 2072004 A1 | 24-04-1992 |
| | | | | DE | 505564 T1 | 19-05-1993 |
| | | | | DE | 69123957 T2 | 30-04-1997 |
| | | | | EP | 0505564 A1 | 30-09-1992 |
| | | | | ES | 2038572 T1 | 01-08-1993 |
| | | | | GR | 930300025 T1 | 24-05-1993 |
| | | | | JP | 3253614 B2 | 04-02-2002 |
| | | | | JP | H05505882 A | 26-08-1993 |
| | | | | US | 5269937 A | 14-12-1993 |
| | | | | WO | 9207244 A1 | 30-04-1992 |

EPO FORM P0459

For more details about this annex : see Official Journal of the European Patent Office, No. 12/82